# EUROPÄISCHE PATENTSCHRIFT

(11) **EP 0 587 667 B1**
(45) Veröffentlichungstag und Bekanntmachung des Hinweises auf die Patenterteilung: **13.09.1995**
(21) Anmeldenummer: 92911502.0
(22) Anmeldetag: 03.06.1992
(51) Int. Cl.: C09D 183/14, C09D 183/08, C09D 185/00

(54) **BESCHICHTUNGSZUSAMMENSETZUNGEN AUF DER BASIS VON FLUORHALTIGEN ANORGANISCHEN POLYKONDENSATEN, DEREN HERSTELLUNG UND DEREN VERWENDUNG**
COATING COMPOSITIONS BASED ON FLUORINE-CONTAINING ANORGANIC POLYCONDENSATES, THEIR PRODUCTION AND THEIR USE
COMPOSITIONS D'ENDUCTION A BASE DE POLYCONDENSES ANORGANIQUES FLUORES, LEUR PREPARATION ET LEUR UTILISATION

(30) Priorität: 03.06.1991 DE 4118184
(43) Veröffentlichungstag der Anmeldung: 23.03.1994
(73) Patentinhaber: INSTITUT FÜR NEUE MATERIALIEN gemeinnützige GmbH, 66123 Saarbrücken (DE)
(72) Erfinder: SCHMIDT, Helmut, D-6604 Saarbrücken (DE); KASEMANN, Reiner, D-6676 Mandelbachtal-Ormesheim (DE)
(74) Vertreter: Barz, Peter, Dr.
(86) Internationale Anmeldenummer: EP9201233
(87) Internationale Veröffentlichungsnummer: WO9221729

(56) Entgegenhaltungen:
- DE-A- 3 836 815
- CHEMICAL ABSTRACTS, vol. 84, no. 10, 8. März 1986, Columbus, Ohio, US; abstract no. 61446F, ABE AKIRA: "coatings for prevention of contamination", Seite 113

## Beschreibung

Die vorliegende Erfindung betrifft Beschichtungszusammensetzungen auf der Basis von fluorhaltigen anorganischen Polykondensaten sowie deren Herstellung und Verwendung.

Es sind bereits zahlreiche Beschichtungszusammensetzungen bekannt, die auf organisch modifizierten anorganischen Polykondensaten, insbesondere solchen von St, Al, Ti und Zr, beruhen und die nach entsprechender Härtung zu Überzügen für die verschiedensten Substrate und mit den unterschiedlichsten vorteilhaften Eigenschaften, z.B. hervorragender Kratzfestigkeit, Fiexibilität, Transparenz und/oder Abriebfestigkeit führen (vgl. z.B. JP-A-7 423 824 und DE-A-3 836 815). Dennoch lassen diese bekannten Beschichtungssysteme noch Raum für Verbesserungen, insbesondere was deren Antihafteigenschaften gegenüber hydrophilen und oleophilen Substanzen sowie gegen Staub anlangt.

Die der vorliegenden Erfindung zugrundeliegende Aufgabe bestand demnach darin, eine Beschichtungszusammensetzung zur Verfügung zu stellen, die neben den hervorragenden Eigenschaften der bereits bekannten Beschichtungssysteme auf der Basis von mit organischen Gruppen modifizierten anorganischen Polykondensaten, insbesondere Transparenz, mechanische Beständigkeit und Abriebfestigkeit, auch ausgezeichnete Antihafteigenschaften gegenüber den unterschiedlichsten Substanzen aufweisen.

Erfindungsgemäß wird die obige Aufgabe gelöst durch eine Beschichtungszusammensetzung auf der Basis von Polykondensaten von einer oder mehreren hydrolysierbaren Verbindungen von Elementen M der Hauptgruppen III bis V und der Nebengruppen II bis IV des Periodensystems der Elemente, wobei zumindest ein Teil dieser Verbindungen neben hydrolysierbaren Gruppen A auch nicht-hydrolysierbare kohlenstoffhaltige Gruppen B aufweist und das Gesamt-Molverhältnis von Gruppen A zu Gruppen B in den zugrundeliegenden monomeren Ausgangsverbindungen 10:1 bis 1:2 beträgt, die dadurch gekennzeichnet ist, daß 0,1 (und insbesondere 0,5) bis 100 Mol-% der Gruppen B Gruppen B' sind, die durchschnittlichen 5 bis 30 Fluoratome aufweisen, die an ein oder mehrere aliphatische Kohlenstoffatome gebunden sind, die durch mindestens zwei Atome von M getrennt sind.

Die Herstellung derartiger Beschichtungszusammensetzungen läßt sich in der Regel mit den herkömmlichen Verfahren zur Bereitstellung derartiger Beschichtungssysteme nicht zufriedenstellend durchführen, insbesondere wenn transparente Überzüge erhalten werden sollen, da bei der für die Hydrolyse der Ausgangsverbindungen erforderlichen Wasserzugabe die Ausgangsverbindungen mit (fluorierten) Gruppen B' dazu neigen, sich zu entmischen und dadurch zu einem Zweiphasensystem führen, mit dem eine zufriedenstellende homogene Beschichtungszusammensetzung nicht mehr erzielt werden kann. Der vorliegenden Erfindung lag somit auch die Aufgabe zugrunde, ein Verfahren zur Herstellung der obigen Beschichtungszusammensetzung bereitzustellen, bei dem die soeben erwähnten Probleme nicht auftreten.

Demzufolge ist Gegenstand der vorliegenden Erfindung auch ein Verfahren zur Herstellung der oben definierten Beschichtungszusammensetzung, das dadurch gekennzeichnet ist, daß man zunächst alle oder einen Teil der Ausgangsverbindungen ohne Gruppen B' durch Zugabe von Wasser hydrolysiert und vorkondensiert, dann die Ausgangsverbindungen mit den Gruppen B' zugibt und nach Reaktion derselben mit der bereits vorhandenen vorhydrolysierten Ausgangsverbindung bzw, Vorkondensaten durch Zugabe von weiterem Wasser und gegebenenfalls der restlichen Ausgangsverbindungen ohne Gruppen B' die Hydrolyse und Kondensation der anwesenden Spezies bis zum Erhalt eines beschichtungsfähigen Systems weiterführt, wobei die Zugabe der Allsgangsverbindungen mit Gruppen B' erst erfolgt, wenn der Wassergehalt des Systems nicht mehr als 5 Gew.-%, bezogen auf das Gesamtgewicht des Systems ohne gegebenenfalls eingesetztes Lösungsmittel, beträgt und nicht mehr als 50% der theoretisch möglichen Gruppen M-OH im System vorliegen.

Beim erfindungsgemäßen Herstellungsverfahren werden also zu-nächst Vorkondensate hergestellt und erst dann werden die fluorierten Ausgangsverbindungen zugesetzt, die dann durch Hydrolyse und Kondensation an diese Vorkondensate gebunden werden und daraufhin bei weiterer Wasserzugabe zu keiner Phasentrennung mehr führen, so daß ein homogenes Beschichtungssystem erhalten werden kann.

Bei den zur Herstellung der erfindungsgemäßen Beschichtungszusammensetzung verwendeten hydrolysierbaren Ausgangsverbindungen handelt es sich vorzugsweise um solche von Si, Al, B, Pb, Sn, Ti, Zr, V und Zn, insbesondere solche von Si, Al, Ti und Zr oder Mischungen davon. Hierzu sei angemerkt, daß selbstverständlich auch andere hydrolysierbare Verbindungen eingesetzt werden können, insbesondere solche von Elementen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthaniden können eingesetzt werden. Vorzugsweise machen die soeben genannten Verbindungen aber nicht mehr als 20 und insbesondere nicht mehr als 10 Mol-% der insgesamt eingesetzten (bzw. zugrundeliegenden) hydrolysierbaren monomeren Verbindungen aus.

Beispiele für hydrolysierbare Gruppen A in den Ausgangsverbindungen (die nicht notwendigerweise als monomere Verbindungen, sondern bereits als entsprechende Vorkondensate von Verbindungen eines oder mehrerer der Elemente M eingesetzt werden können) sind Halogen (F, Cl, Br und I, insbesondere Cl und Br), Alkoxy (insbesondere C₁₋₄-Alkoxy, wie z.B. Methoxy, Ethoxy, n-Propoxy, i-Propoxy und Butoxy), Aryloxy (insbesondere C₆₋₁₀-Aryloxy, z.B. Phenoxy), Acyloxy (insbesondere C₁₋₄-Acyloxy, wie z.B. Acetoxy und Propionyloxy) und Alkylcarbonyl (z.B. Acetyl).

Neben den oben genannten hydrolysierbaren Gruppen A können als weitere ebenfalls geeignete Gruppen erwähnt werden Wasserstoff und Alkoxyreste mit 5 bis 20, insbesondere 5 bis 10 Kohlenstoffatomen und Halogen- und Alkoxy-substituierte Alkoxygruppen (wie z.B. β-Methoxyethoxy).

Da die hydrolysierbaren Gruppen A im Endprodukt praktisch nicht mehr vorhanden sind, sondern durch Hydrolyse verlorengehen, wobei das Hydrolyseprodukt früher oder später auch in irgendeiner geeigneten Weise entfernt werden muß, sind solche hydrolysierbare Gruppen A besonders bevorzugt, die keine Substituenten tragen und zu Hydrolyseprodukten mit niedrigem Molekulargewicht, wie z.B. niederen Alkoholen, wie Methanol, Ethanol, Propanol, n-, i-, sec- und tert-Butanol, führen. Die letztgenannten Gruppen A sind auch deshalb bevorzugt, da sie bei der Hydrolyse den pH-Wert praktisch nicht beeinflussen (im Gegensatz zu z.B. Halogen), was von Vorteil ist, weil der pH-Wert der Reaktionsmischung vor Zugabe der Fluor-haltigen Ausgangsverbindungen vorzugsweise im Bereich von 4 bis 9, insbesondere 5 bis 6,5, liegt und Hydrolyseprodukte, die den pH-Wert merklich aus dem soeben angegebenen Bereich heraus verschieben, vorzugsweise durch Zugabe geeigneter Substanzen (Säuren oder Basen) neutralisiert werden.

Die nicht-hydrolysierbaren Gruppen B, die von den Gruppen B' verschieden sind, werden vorzugsweise ausgewählt aus Alkyl (insbesondere C₁₋₄-Alkyl, wie z.B. Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄-Alkinyl, wie Acetylenyl und Propargyl) und Aryl (insbesondere C₆₋₁₀-Aryl, wie z.B. Phenyl und Naphthyl), wobei die soeben genannten Gruppen gegebenenfalls einen oder mehrere Substituenten, wie z.B. Halogen, Hydroxy, Alkoxy, Epoxy, gegebenenfalls substituiertes Amino usw. aufweisen können. Die obigen Alkylreste schließen auch die entsprechenden cyclischen und Aryl-substituierten Reste, wie z.B. Cyclohexyl und Benzyl, ein, während die Alkenyl- und Alkinylgruppen ebenfalls cyclisch sein können und die genannten Arylgruppen auch Alkarylgruppen (wie Tolyl und Xylyl) mit einschließen sollen. Besonders bevorzugte nicht-hydrolysierbare Gruppen B sind solche, die über eine (mehrfach) ungesättigte Kohlenstoff-Kohlenstoff-Bindung verfügen. In diesem Zusammenhang sind insbesondere zu erwähnen Gruppen, die über einen (Meth)acryloxyrest verfügen, insbesondere einen(Meth)acryloxy-C₁₋₄-alkylrest wie z.B. (Meth)acryloxypropyl, Die Anwesenheit derartiger ungesättigter Gruppen in den entsprechenden Polykondensaten hat den Vorteil, daß nach der Auftragung der Beschichtungszusammensetzung auf ein bestimmtes Substrat eine zweifache Härtung erfolgen kann, nämlich eine thermisch oder photochemisch induzierte Verknüpfung der ungesättigten organischen Reste durch (radikalische) Polymerisation und eine thermische Vervollständigung der Polykondensation (z.B. durch Wasserabspaltung aus noch vorhandenen M-OH-Gruppen).

Erfindungsgemäß wird es demnach bevorzugt, wenn 1 bis 100, insbesondere 5 bis 85 und besonders bevorzugt 20 bis 70 Mol% der Gruppen B (inklusive der Gruppen B') mindestens eine Kohlenstoff-Kohlenstoff-Doppel- oder Dreifachbindung aufweisen.

Insbesondere bei Verbindungen, die im Vergleich zu Siliciumverbindungen bei der Hydrolyse sehr reaktiv sind (z.B. Al-Verbindungen, aber auch Verbindungen von Zr und Ti) kann es sich empfehlen, die entsprechenden Ausgangsverbindungen in komplexierter Form einzusetzen, um eine spontane Ausfällung der entsprechenden Hydrolysate nach Wasserzugabe zu vermeiden. Als Komplexbildner eignen sich insbesondere organische (gegebenenfalls ungesättigte) Carbonsäuren (wie z.B. Acrylsäure und Methacrylsäure), β-Diketone (z.B. Acetylaceton) und β-Carbonylcarbonsäureester (wie z.B. Acetessigsäureethylester). Es können aber auch alle anderen auf diesem Gebiet bekannten Komplexbildner eingesetzt werden, wobei es in der Regel sogar ausreicht, die zu hydrolysierende Verbindungen (z.B. Aluminiumverbindung) in Mischung mit dem Komplexbildner einzusetzen.

Erfindungsgemäß wird es bevorzugt, wenn das Gesamtmolverhältnis von Gruppen A zu Gruppen B in allen Ausgangsverbindungen (einschließlich der fluorierten) 5:1 bis 1:1 und insbesondere 4:1 bis 2:1 beträgt. Dabei ist zu berücksichtigen, daß sich dieses Verhältnis auf monomere Ausgangsverbindungen bezieht, d.h. bei eingesetzten Vorkondensaten entsprechend umgerechnet werden muß.

Konkrete Beispiele für nicht-fluorierte Silicium-Ausgangsverbindungen (d.h. Verbindungen ohne Gruppen B') für die Herstellung der erfindungsgemäßen Beschichtungszusammensetzung sind die folgenden:
Si(OCH₃)₄, Si(OC₂H₅)₄, Si(O-n- oder i-C₃H₇)₄
Si(OC₄H₉)₄, SiCl₄, HSiCl₃, Si(OOCCH₃)₄
CH₃-SiCl₃, CH₃-Si(OC₂H₅)₃, C₂H₅-SiCl₃, C₂H₅-Si(OC₂H₅)₃,
C₃H₇-Si(OCH₃)₃, C₆H₅-Si(OCH₃)₃, C₆H₅-Si(OC₂H₅)₃,
(CH₃O)₃-Si-C₃H₆-Cl,
(CH₃)₂SiCl₂_{,} (CH₃)₂Si(OCH₃)₂, (CH₃)₂Si(OC₂H₅)₂,
(CH₃)₂Si(OH)₂, (C₆H₅)₂SiCl₂_{,} (C₆H₅)₂Si(OCH₃)₂,
(C₆H₅)₂Si(OC₂H₅)₂, (i-C₃H₇)₃SiOH,
CH₂=CH-Si (OOCCH₃)₃
CH₂=CH-SiCl₃, CH₂=CH-Si(OCH₃)₃, CH₂=CH-Si(OC₂H₅)₃,
CH₂=CH-Si(OC₂H₄OCH₃)₃, CH₂=CH-CH₂-Si(OCH₃)₃,
CH₂=CH-CH₂-Si (OC₂H₅)₃,
CH₂=CH-CH₂-Si(OOCCH₃)₃,
CH₂=C(CH₃)-COO-C₃H₇-Si(OCH₃)₃'
CH₂=C(CH₃)-COO-C₃H₇-Si(OC₂H₅)₃,
(C₂H₅O)₃Si-C₆H₄-NH₂, CH₃(C₂H₅O)₂Si-(CH₂)₄-NH₂,
(C₂H₅O)₃Si-C₃H₆-NH₂, (CH₃)₂(C₂H₅O)Si-CH₂-NH₂,
(C₂H₅O)₃Si-C₃H₆-CN, (CH₃O)₃Si-C₄H₈-SH, (CH₃O)₃Si-C₆H₁₂-SH,
(CH₃O)₃Si-C₃H₆-SH, (C₂H₅O)₃Si-C₃H₆-SH,
(CH₃O)₃Si-C₃H₆-NH-C₂H₄-NH₂,
(CH₃O)₃Si-C₃H₆-NH-C₂H₄-NH-C₂H₄-NH₂, 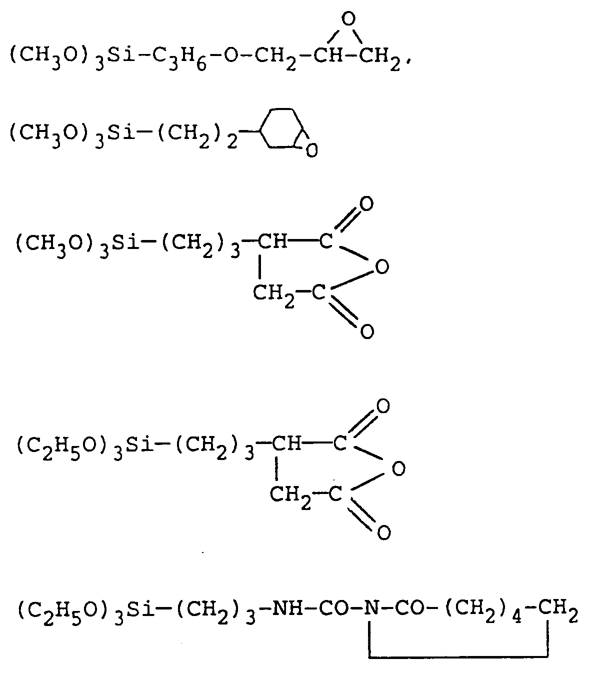
Diese Silane lassen sich nach bekannten Methoden herstellen; vgl. W. Noll "Chemie und Technologie der Silicone", Verlag Chemie GmbH, Weinheim/Bergstraße (1968).

Wie bereits oben erwähnt, lassen sie die erfindungsgemäß einsetzbaren Siliciumverbindungen ganz oder teilweise in Form von Vorkondensaten einsetzen, d.h. Verbindungen, die durch teilweise Hydrolyse der entsprechenden monomeren Verbindungen, entweder allein oder im Gemisch mit hydrolysierbaren Verbindungen anderer Elemente M, wie sie weiter unten noch näher beschrieben werden, entstanden sind. Derartige, im Reaktionsmedium vorzugsweise lösliche Oligomere können geradkettige oder cyclische niedermolekulare Teilkondensate (Polyorganosiloxane) mit einem Kondensationsgrad von z.B. 2 bis 100 (z.B. 2 bis 20), insbesondere 6 bis 10, sein.

Erfindungsgemäß bevorzugt eingesetzte Aluminiumverbindungen weisen die allgemeine Formel

Alx₃

auf, in der die Reste X, die gleich oder Verschieden sein können, ausgewählt sind aus Halogen, Alkoxy, Alkoxycarbonyl und Hydroxy. Hinsichtlich der näheren (bevorzugten) Definition dieser Reste kann auf die eingangs gemachten Ausführungen verwiesen werden.

Besonders bevorzuge Aluminium-Ausgangsverbindungen sind die Aluminiumalkoxide und, in eingeschränktem Maße, auch die Aluminiumhalogenide. In diesem Zusammenhang können als konkrete Beispiele genannt werden:
Al(OCH₃)₃, Al(OC₂H₅)₃, Al(O-n-C₃H₇)₃,
Al(O-i-C₃H₇)₃, Al(OC₄H₉)₃, Al(O-i-C₄H₉)₃,
Al(O-sek-C₄H₉)₃, AlCl₃, AlCl(OH)₂
Bei Raumtemperatur flüssige Verbindungen, wie z.B. Aluminiumsek-butylat und Aluminium-isopropylat, werden besonders bevorzugt. Analoges gilt auch für die übrigen erfindungsgemäß einsetzbaren hydrolysierbaren Verbindungen.

Geeignete hydrolysierbare Titan- und Zirkoniumverbindungen, die erfindungsgemäß eingesetzt werden können sie z.B. solche der allgemeinen Formel

M'XₙR₄₋ₙ

in der M' Ti oder Zr bedeutet und X wie oben definiert ist. R steht für eine nicht-hydrolysierbare Gruppe A der eingangs definierten Art und n ist eine ganze Zahl von 1 bis 4, besonders bevorzugt 4.

Konkrete Beispiele für erfindungsgemäß einsetzbare Zirkonium- und Titanverbindungen sind die folgenden:
TiCl₄, Ti(OC₂H₅)₄, Ti(OC₃H₇)₄,
Ti(O-i-C₃H₇)₄, Ti(OC₄H₉)₄, Ti(2-ethylheyoxy)₄;
ZrCl₄, Zr(OC₂H₅)₄, Zr(OC₃H₇)₄, Zr(O-i-C₃H₇)₄, Zr(OC₄H₉)₄,
ZrOCl₂, Zr(2-ethylhexoxy)₄
Weitere hydrolysierbare Verbindungen, die erfindungsgemäß (vorzugsweise in untergeordnetem Maß) eingesetzt werden können, sind z.B Bortrihalogenide und Borsäureester (wie z.B. BCl₃, B(OCH₃)₃ und B(OC₂H₅)₃), Zinntetrahalogenide und Zinntetraalkoxide (wie z.B. SnCl₄ und Sn(OCH₃)₄) und Vanadylverbindungen, wie z.B. VOCl₃ und VO(OCH₃)₃.

In den erfindungsgemäßen Beschichtungszusammensetzungen können alle, zumindest jedoch 0,1 Mol-% der an die Elemente M gebundenen nicht-hydrolysierbaren Gruppen B Gruppen B' sein, die im Durchschnitt 5 bis 30 Fluoratome aufweisen, welche an ein oder mehrere aliphatische (einschließlich cycloaliphatische) Kohlenstoffatome gebunden sind, die durch mindestens zwei Atome von M getrennt sind. Vorzugsweise sind 1 bis 50 und insbesondere 2 bis 30 Mol-% der Gruppen B Gruppen B', wobei ein besonders bevorzugter Prozentsatz im Bereich von 5 bis 25 Mol-% liegt.

Vorzugsweise enthalten die Gruppen B' im Durchschnitt 5 bis 25 und insbesondere 8 bis 18 Fluoratome, die an aliphatische Kohlenstoffatome gebunden sind, wobei diejenigen Fluoratome nicht berücksichtigt sind, die gegebenenfalls in anderer Weise, z.B. an aromatische Kohlenstoffatome, gebunden sind (z.B. im Falle von C₆F₄). Bei der fluorhaltigen Gruppe B' kann es sich auch um einen Chelatliganden handeln. Ebenso ist es möglich, daß sich ein oder mehrere Fluoratome an einem Kohlenstoffatom befinden, von dem eine Doppel- oder Dreifachbindung ausgeht. Da die Gruppen B' nur im Durchschnitt fünt entsprechende Fluoratome aufweisen müssen, können auch Gruppen B' eingesetzt werden, die über nur 1 Fluoratom verfügen, wenn gleichzeitig genügend Gruppen B' vorhanden sind, die mehr als 4 Fluoratome aufweisen.

Insbesondere im Hinblick auf die Zugänglichkeit der entsprechenden Ausgangssubstanzen werden als Ausgangsverbindungen mit Gruppen B' Siliciumverbindungen bevorzugt. Konkrete Beispiele für derartige Siliciumverbindungen, die zum größten Teil auch im Handel erhältlich sind, sind die folgenden:
C₂F₅CH₂CH₂-SiY₃
C₄F₉CH₂CH₂-SiY₃
n-C₆F₁₃CH₂CH₂-SiY₃
n-C₈F₁₇CH₂CH₂-SiY₃
n-C₁₀F₂₁CH₂CH₂-SiY₃
(Y = OCH₃, OC₂H₅ oder Cl)
i-C₃F₇O-(CH₂)₃-SiCl₂(CH₃)
n-C₆F₁₃CH₂CH₂SiCl₂(CH₃)
n-C₆F₁₃CH₂CH₂SiCl(CH₃)₂
Insbesondere wenn sich unter den Gruppen B in den Polykondensaten der erfindungsgemäßen Beschichtungszusammensetzung solche mit ungesättigten Kohlenstoff-Kohlenstoff-Bindungen befinden, enthält die erfindungsgemäße Beschichtungszusammensetzung vorzugsweise auch einen Katalysator für die thermische und/oder photochemisch induzierte Härtung der auf ein geeignetes Substrat aufgetragenen Beschichtungszusammensetzung. Insbesondere bevorzugt ist die Zugabe eines Photopolymerisationsinitiators. Als Photoinitiatoren können z.B. die im Handel erhältlichen eingesetzt werden. Beispiele hierfür sind Irgacure® 184 (1-Hydroxycyclohexylphenylketon), Irgacure ® 500 (1-Hydroxycyclohexylphenylketon, Benzophenon) und andere von der Firma Ciba-Geigy erhältliche Photoinitiatoren vom Irgacure®-Typ; Darocur® 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzyldimethylketal, 1,1,1-Trichloracetophenon, Diethoxyacetophenon und Dibenzosuberon.

Als gegebenenfalls eingesetzte thermische Initiatoren kommen u.a. organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete Beispiele für derartige thermische Initiatoren sind Dibenzoylperoxid, tert.-Butylperbenzoat und Azobisisobutyronitril

Die obigen Initiatoren werden der Beschichtungszusammensetzung in üblichen Mengen zugegeben. So kann beispielsweise einem Lack, der 30 bis 50 Gew.-% Feststoff enthält, Initiator in einer Menge von z.B. 0,5 bis 2 Gew.-% (bezogen auf die Gesamtmenge) Zugesetzt werden.

Wenn eine photochemische oder thermische Härtung von ungesättigten Gruppen B in den Polykondensaten beabsichtigt wird, kann es sich auch als zweckmäßig erweisen, der Beschichtungszusammensetzung organische ungesättigte Verbindungen zuzusetzen, die dann mit diesen ungesättigten Gruppen der Polykondensate copolymerisieren können. Beispiele für derartige ungesättigte organische Verbindungen sind Styrol, Acrylsäure, Methacrylsäure und entsprechende Derivate (z.B. Ester, Amide, Nitrile) der soeben genannten Säuren.

Derartige Verbindungen können auch teil- oder perfluoriert sein (z.B. CₙFₓCOOH mit n = 1-20). Ebenso können Verbindungen eingesetzt werden, die über (per)fluorierte Gruppen verfügen, welche während der Herstellung der Beschichtungszusammensetzung mit Gruppen B reagieren und dabei Gruppen B' liefern (z.B. durch Reaktion von S-H- oder N-H-Gruppen mit Hexafluorpropenoxid oder durch Polymerisieren von Kohlenstoff-Kohlenstoff-Doppelbindungen (erst) beim Ansäuern der bereits aufgetragenen Beschichtungszusammensetzung).

Wie bereits oben erwähnt kann die Herstellung der erfindungsgemäßen Beschichtungszusammensetzung in der Regel nicht dadurch erfolgen, daß man die zu hydrolysierenden und kondensierenden Ausgangsverbindungen mischt und daraufhin Wasser in geeigneter Weise zugibt, da in diesem Fall die hydrolysierbaren Ausgangsverbindungen mit Gruppen B' gewöhnlich zu einer Phasenseparation führen und dadurch keine zufriedenstellende Beschichtungszusammensetzung mehr erhalten werden kann.

Erfindungsgemäß wird demgemäß zunächst eine Hydrolyse und Vorkondensation ohne Beteiligung der Ausgangsverbindungen mit Gruppen B' durchgeführt und erst danach werden die letztgenannten Verbindungen der Mischung zugefügt, wodurch überraschenderweise keine Phasentrennung mehr auftritt. Danach kann die Hydrolyse und Polykondensation weitergeführt werden, indem man weiteres Wasser und gegebenenfalls weitere Ausgangsverbindungen ohne Gruppen B' zufügt. Die Umsetzung wird dann in an sich bekannter Weise durchgeführt, bis ein beschichtungsfähiges System erhalten wird.

Bei der erfindungsgemäßen Herstellung der Beschichtungszusammensetzung ist es wichtig, daß bei Zugabe der Ausgangsverbindungen mit Gruppen B' der Gehalt an freiem Wasser im System 5 Gew.-%, inbesondere 3,5 Gew.-% und besonders bevorzugt 2 Gew.-% nicht überschreitet und daß maximal nur 50% der theoretisch möglichen Gruppen M-OH vorliegen. Um sicherzustellen, daß sich die obigen Parameter tatsächlich in dem soeben beschriebenen Rahmen bewegen, kann z.B. vor Zugabe der fluorhaltigen Ausgangsverbindungen eine Titration (z.B. nach Karl Fischer) und/oder eine spektroskopische Bestimmung (z.B. mittels ²⁹Si-NMR) durchgeführt werden.

Wie bereits erwähnt, kann die Herstellung der erfindungsgemäßen Beschichtungszusammensetzung mit Ausnahme des Zugabezeitpunkts der fluorierten Ausgangsverbindungen in auf diesem Gebiet üblicher Art und Weise erfolgen. Werden am Anfang (praktisch) ausschließlich (bei der Hydrolyse relativ reaktionsträge) Siliciumverbindungen eingesetzt, kann die Hydrolyse in den meisten Fällen dadurch erfolgen, daß man der oder den zu hydrolysierenden Siliciumverbindungen, die entweder als solche oder gelöst in einem geeigneten Lösungsmittel vorliegen (siehe unten), Wasser bei Raumtemperatur oder unter leichter Kühlung direkt zugibt (vorzugsweise unter Rühren) und die resultierende Mischung daraufhin einige Zeit (einige Minuten bis einige Stunden) rührt. Bei Anwesenheit der reaktiveren Verbindungen von z.B. Al, Ti und Zr empfiehlt sich in der Regel eine stufenweise Zugabe des Wassers. Unabhängig von der Reaktivität der anwesenden Verbindungen erfolgt die Hydrolyse in der Regel bei einer Temperatur nicht über 50°C, vorzugsweise zwischen 0°C und 30°C bzw. dem Siedepunkt des gegebenenfalls eingesetzten Lösungsmittels. Prinzipiell muß kein Lösungsmittel eingesetzt werden, insbesondere dann, wenn es sich bei den hydrolysierbaren Gruppen A um solche handelt, die bei der Hydrolyse zur Bildung von (niederen) Alkoholen, wie z.B. Methanol, Ethanol, Propanol und Butanol führen. Andernfalls (z.B. bei Verwendung von Halogensilanen) sind geeignete Lösungsmittel z.B. die soeben genannten Alkohole sowie Ether, vorzugsweise niedere Dialkylether wie Diethylether und Dibutylether und THF, aromatische Kohlenwasserstoffe (z.B. Toluol), Ester wie Essigsäureethylester, und insbesondere Butoxyethanol. Selbstverständlich kann ein Lösungsmittel auch eingesetzt werden, wenn die Hydrolyse ausschließlich zu (niederen) Alkoholen als Nebenprodukt führt.

Bezüglich der insgesamt für die Hydrolyse zu verwendenden Wassermenge sei bemerkt, daß es besonders bevorzugt ist, wenn das Molverhältnis von gesamtem zugegebenem Wasser zu hydrolysierbaren Gruppen A in allen eingesetzten Ausgangsverbindungen im Bereich von 1:1 bis 0,3:1, insbesondere 0,7:1 bis 0,5:1 liegt.

Die nach dem erfindungsgemäßen Verfahren hergestellte Beschichtungszusammensetzung kann entweder als solche oder nach teilweiser oder nahezu vollständiger Entfernung des verwendeten Lösungsmittels bzw. des während der Reaktion gebildeten Lösungsmittels (z.B. der durch Hydrolyse der Alkoxide entstandenen Alkohole) oder aber nach Zugabe eines geeigneten Lösungsmittels zwecks Viskositätserniedrigung auf ein geeignetes Substrat aufgebracht werden.

Insbesondere wenn die Herstellung des Lacks ohne Lösungsmittel und unter Wasserzugabe im unteren Teil des erfindungsgemäß bevorzugten Bereichs erfolgte, kann es erforderlich sein, die Beschichtungszusammensetzung vor dem Auftragen mit einem geeigneten organischen Lösungsmittel zu verdünnen. Für diesen Zweck besonders geeignet sind Toluol, Essigester, THF, Glycolsäurebutylester, Butoxyethanol, Ethylenglycolmono- und -diethylether und Mischungen derselben. Wird die Beschichtungszusammensetzung mit einem Lösungsmittel verdünnt, so liegt das Mengenverhältnis von Lack zu Lösungsmittel vorzugsweise im Bereich von 1:0,5 bis 1:2.

Ist die Aushärtung der Beschichtungszusammensetzung durch Bestrahlung beabsichtigt, so muß der Beschichtungszusammensetzung vor der Auftragung noch ein Photoinitiator zugesetzt werden (siehe oben). Vorzugsweise wird ein Initiator auch zugesetzt, wenn die Aushärtung auf thermischem Wege erfolgen soll.

Spätestens vor der Verwendung des Lacks können diesem gegebenenfalls noch übliche Lack-Additive zugegeben werden, wie z.B. Färbemittel, Füllstoffe, Oxidationsinhibitoren, Verlaufsmittel, UV-Absorber und dergleichen.

Die gegebenenfalls (und vorzugsweise) mit einem Initiator und gegebenenfalls den obigen Additiven versehene Beschichtungszusammensetzung wird dann auf ein geeignetes Substrat aufgebracht. Für diese Beschichtung können übliche Beschichtungsverfahren Verwendung finden, z.B. Tauchen, Fluten, Ziehen, Gießen, Schleudern, Spritzen oder Aufstreichen. Besonders bevorzugt werden erfindungsgemäß das Ziehen, Spritzen und Schleudern. Vor der Härtung wird die aufgetragene Beschichtungszusammensetzung vorzugsweise (bei Raumtemperatur oder leicht erhöhter Temperatur) getrocknet. Bevorzugte Schichtdicken (im gehärteten Zustand) liegen bei 1 bis 100, insbesondere 5 bis 30 µm.

Nach der gegebenenfalls vorgenommenen Trocknung kann die auf das Substrat aufgebracht Beschichtungszusammensetzung abhängig von der Art bzw. Anwesenheit eines Initiators thermisch und/oder durch Bestrahlung (z.B. mit einem UV-Strahler, einem Laser, usw.) in an sich bekannter Weise gehärtet werden.

Im Falle der thermischen Härtung liegen die Härtungstemperaturen vorzugsweise bei mindestens 50°C, insbesondere mindestens 90°C. Die maximale Härtungstemperatur wird u.a. auch von der thermischen Belastbarkeit des zu beschichtenden Substrats bestimmt. Im Falle von Glas oder Metallen können Härtungstemperaturen bis zu 350°C verwendet werden. Vorzugsweise werden jedoch Härtungstemperaturen von 200°C und insbesondere 180°C nicht überschritten. Die Härtungszeit beträgt in der Regel 1 bis 2 Stunden.

Als zu beschichtende Substrate eignen sich insbesondere Glas, Keramik, Metall, Kunststoffe Und Papier. Als Beispiele für Metalle seien z.B. Kupfer, Aluminium, Messing, Eisen und Zink genannt. Unter den Polymeren verdienen insbesondere transparente Polymere wie Polycarbonat, Polymethylmethacrylat, Polyacrylate, aber auch Polyethylenterephthalat Erwähnung.

Die mit den erfindungsgemäßen Beschichtungszusammensetzungen erhältlichen Überzüge zeichnen sich insbesondere dadurch aus, daß sie transparent und mechanisch widerstandsfähig sind und darüber hinaus eine Antihaftwirkung gegenüber den verschiedensten Materialien zeigen, die derjenigen von Beschichtungen auf der Basis von Polytetrafluorethylen, Polyvinylidenfluorid etc. ebenbürtig oder sogar überlegen ist. Während jedoch z.B. PTFE auf Materialien wie Glas praktisch nicht haftet, zeigen die erfindungsgemäß erhältlichen Überzüge eine sehr gute Haftung nicht nur auf Glas (insbesondere wenn in den nicht ausgehärteten Beschichtungszusammensetzungen noch größere Anteile an M-OH Gruppen vorhanden sind), sondern auch auf Kunststoffen und Metallen (die gegebenenfalls in geeigneter Weise, z.B. durch Korona-Behandlung, vorbehandelt sein können).

Insbesondere unter Berücksichtigung der guten Haftung auf Glas eignen sich die erfindungsgemäßen Beschichtungszusammensetzungen insbesondere zur Beschichtung von Gläsern, bei denen eine schmutz-, wasser- und ölabweisende Oberfläche besonders wünschenswert ist, z.B. für die Beschichtung von (insbesondere Außen-) Spiegeln von Kraftfahrzeugen, aber auch z.B. von Windschutzscheiben.

Die folgenden Beispiele erläutern die vorliegende Erfindung.

### BEISPIEL 1

1 Mol 3-Methacryloxypropyltrimethoxysilan (MEMO) wird 1 Stunde bei 50°C in 3 Mol Methanol mit 1,5 Mol bidestilliertem Wasser umgesetzt. Nach Kühlen unter 0°C werden 0,1 bis 0,3 Mol Zirkoniumtetrapropylat, entweder als solches oder zusammen mit 0,1 bis 0,6 Mol Methacrylsäure, zugegeben. Nach 1,5 Stunden werden nach Kontrolle des Wassergehalts bis zu 0,6 Mol bidestilliertes Wasser zugegeben und es wird 12 Stunden bei Raumtemperatur gerührt. Zu diesem Basislack werden unter Rühren variable Mengen 1H,1H,2H,2H-Perfluoroctyltriethoxysilan gegeben, worauf die Reaktionsmischung mindestens 2 Stunden lang bei Raumtemperatur umgesetzt wird. Die Konzentration an Fluorsilan beträgt dabei 0,01 bis 0,25 Mol Fluorsilan pro Mol MEMO.

Zum Beschichten von Substraten, beispielsweise Glas, werden dem so erhaltenen Lack 0,5 bis 2 Gew.-%, vorzugsweise 1 Gew.%, Photoinitiator zugesetzt. Die Wahl des Photoinitiators orientiert sich am Emissionsspektrum der verwendeten UV-Lampen, die zum Aushärten der Schicht benutzt werden. Bei UV-Lampen, die Strahlung im Bereich von 254 nm aussenden, wird als Photoinitiator z.B. Irgacure ® 184 (Ciby-Geigy) eingesetzt. Der so erhaltene Lack kann mit Membranfiltern von 0,2 bis 0,8 µm Porenweite filtriert werden. Als Beschichtungsarten eignen sich z.B. Rakeln, Tauchen, Spritzen und Schleudern, wobei zur Einstellung optimaler lacktechnischer Parameter (beispielsweise der Viskosität) wasserlösliche Lösungsmittel wie Butanol zugesetzt werden können.

Die Aushärtung des aufgebrachten Lacks erfolgt in einem zweistufigen Prozeß, nämlich zunächst durch Bestrahlung mit UV-Licht, um die Polymerisation der vorhandenen ungesättigten organischen Gruppen zu bewirken. Zu diesem Zweck werden die beschichteten Substrate mit einer Geschwindigkeit von 0,5 bis 2 m/min, vorzugsweise 1 m/min, unter 1 oder 2 UV-Röhren mit je 1000 Watt Leistung durchgefahren, wonach der Lack fingertrocken ist. Die zweite Stufe des Aushärtens besteht aus einem 1-stündigen Ausheizen bei 130°C in einem Umlufttrockenschrank. (Die Lackhärtung kann aber auch ausschließlich durch Strahlung oder ausschließlich thermisch erfolgen.)

### BEISPIEL 2

Es wird analog zu Beispiel 1 verfahren, aber statt
C₆F₁₃CH₂CH₂Si(OC₂H₅)₃ wird C₈F₁₇CH₂CH₂Si(OC₂H₅)₃ eingesetzt.

### BEISPIEL 3

Das Verfahren von Beispiel 1 wird wiederholt, aber unter Verwendung von Gemischen der in den Beispielen 1 und 2 verwendeten fluorierten Verbindungen in beliebigen Mengenverhältnissen.

### BEISPIEL 4

1 Mol MEMO wird mit 1,5 Mol H₂O versetzt und die resultierende Mischung wird danach 12 bis 50 Stunden bei Raumtemperatur gerührt. Dann werden 0,01 bis 0,25 Mol eines der in den obigen Beispielen eingesetzten fluorierten Silane zugegeben. Nach Zugabe von 0,5 Mol H₂O pro Mol durch das Fluorsilan eingeführte Ethoxygruppe wird solange gerührt, bis die Lösung homogen ist (ca. 10 Minuten). Anschließend werden 0,1 bis 0,3 Mol Zirkoniumtetrapropylat, entweder als solches oder in Mischung mit 0,1 bis 0,6 Mol Methacrylsäure, zugegeben, woran sich die Zugabe von bis zu 2 Mol H₂O pro Mol eingesetztes Zirkoniumtetrapropylat anschließt. Die resultierende Mischung wird dann noch etwa 1 Stunde bei Raumtemperatur gerührt. Der so hergestellte Lack wird analog Beispiel 1 zur Beschichtung von Glas, Polycarbonat, Polyacrylat, Polymethylmethacrylat und Polyethylenterephthalat eingesetzt.

## Patentansprüche

1. Beschichtungszusammensetzung auf der Basis von Polykondensaten von einer oder mehreren hydrolysierbaren Verbindungen mindestens eines Elements M aus den Hauptgruppen III bis V und den Nebengruppen II bis IV des Periodensystems der Elemente, wobei zumindest ein Teil dieser Verbindungen neben hydrolysierbaren Gruppen A auch nichthydrolysierbare kohlenstoffhaltige Gruppen B aufweist und das Gesamt-Molverhältnis von Gruppen A zu Gruppen B in den zugrundeliegenden monomeren Ausgangsverbindungen 10:1 bis 1:2 beträgt, dadurch gekennzeichnet, daß 0,1 bis 100 Mol-% der Gruppen B Gruppen B' sind, die durchschnittlich 5 bis 30 Fluoratome aufweisen, die an ein oder mehrere aliphatische Kohlenstoffatome gebunden sind, die durch mindestens zwei Atome von M getrennt sind.

2. Beschichtungszusammensetzung nach Anspruch 1, dadurch gekennzeichnet, daß die Elemente M aus Si, Al, B, Pb, Sn, Ti, Zr, V und Zn, insbesondere Si Al, Ti und Zr, oder Mischungen dieser Elemente ausgewählt sind.

3. Beschichtungszusammensetzung nach irgendeinem der An-Sprüche 1 und 2, dadurch gekennzeichnet, daß das Molverhältnis von Gruppen A zu Gruppen B 5:1 bis 1:1 und insbesondere 4:1 bis 2:1 beträgt.

4. Beschichtungszusammensetzung nach irgendeinem der Ansprüche 1 bis 3, dadurch gekennzeichnet, daß 1 bis 50, insbesondere 2 bis 30 und besonders bevorzugt 5 bis 25 Mol-% der Gruppen B Gruppen B' sind.

5. Beschichtungszusammensetzung nach irgendeinem der Ansprüche 1 bis 4, dadurch gekennzeichnet, daß in den Gruppen B' durchschnittlich 5 bis 25 und insbesondere 8 bis 18 Fluoratome an aliphatische Kohlenstoffatome gebunden sind, die durch mindestens zwei andere Atome, vorzugsweise Kohlenstoffatome, von M getrennt sind.

6. Beschichtungszusammensetzung nach irgendeinem der Ansprüche 1 bis 5, dadurch gekennzeichnet, daß 1 bis 100, insbesondere 5 bis 85 und besonders bevorzugt 20 bis 70 Mol-% der Gruppen B (inklusive der Gruppen B') mindestens eine Kohlenstoff-Kohlenstoff-Doppel- oder Dreifachbindung aufweisen und vorzugsweise ausgewählt sind aus Acryloxyalkyl und Methacryloxyalkylgruppen

7. Beschichtungszusammensetzung nach irgendeinem der Ansprüche 1 bis 6, dadurch gekennzeichnet, daß insbesondere bei Anwesenheit von hydrolysierbaren Al-, Ti- und/oder Zr-Verbindungen ein Teil der Gruppen B einen Komplex mit dem entsprechenden M bildet, wobei die komplexbildenden Gruppen vorzugsweise ausgewählt sind aus gegebenenfalls fluorierten und/oder gegebenenfalls ungesättigten aliphatischen Carbonsäuren, β-Diketonen und β-Carbonylcarbonsäureestern.

8. Beschichtungszusammensetzung nach irgendeinem der Ansprüche 6 und 7, dadurch gekennzeichnet, daß sie außerdem einen Photoinitiator enthält.

9. Beschichtungszusammensetzung nach irgendeinem der Ansprüche 6 bis 8, dadurch gekennzeichnet, daß sie außerdem eine oder mehrere radikalisch polymerisierbare Kohlenstoffverbindungen, vorzugsweise ausgewählt aus Styrol, Acrylsäure, Methacrylsäure und deren Derivaten, enthält.

10. Verfahren zur Herstellung einer Beschichtungszusammensetzung nach Anspruch 1, dadurch gekennzeichnet, daß man zunächst alle oder einen Teil der Ausgangsverbindungen ohne Gruppen B' durch Zugabe von Wasser hydrolysiert und vorkondensiert, dann die Ausgangsverbindungen mit den Gruppen B' zugibt und nach Reaktion derselben mit den bereits vorhandenen Vorkondensaten durch Zugabe von weiterem Wasser und gegebenenfalls den restlichen Ausgangsverbindungen ohne Gruppen B' die Hydrolyse und Kondensation der anwesenden Spezies bis zum Erhalt eines beschichtungsfähigen Systems weiterführt, wobei die Zugabe der Ausgangsverbindungen mit Gruppen B' erst erfolgt, wenn der Wassergehalt des Systems nicht mehr als 5 Gew.-%, bezogen auf das Gesamtgewicht des Systems ohne gegebenenfalls eingesetztes Lösungsmittel, beträgt und nicht mehr als 50% der theoretisch möglichen M-OH Gruppen im System vorliegen.

11. Verfahren nach Anspruch 10, dadurch gekennzeichnet, daß mindestens 90 und vorzugsweise mindestens 95 Mol-% der hydrolysierbaren Gruppen A in den Ausgangsverbindungen Alkoxygruppen, insbesondere C₁₋₄-Alkoxygruppen und besonders bevorzugt Methoxy und Ethoxy sind.

12. Verfahren nach irgendeinem der Ansprüche 10 und 11, dadurch gekennzeichnet, daß es sich bei den Ausgangsverbindungen um solche von Si, gegebenenfalls in Kombination mit Verbindungen von Al und/oder Zr und/oder Ti handelt.

13. Verfahren nach irgendeinem der Ansprüche 10 bis 12, dadurch gekennzeichnet, daß der Wassergehalt des Systems vor der Zugabe der Ausgangsverbindungen mit Gruppen B' nicht größer als 3,5 und insbesondere nicht größer als 2 Gew.-% ist.

14. Verfahren nach irgendeinem der Ansprüche 10 bis 13, dadurch gekennzeichnet, daß das Molverhältnis von gesamten zugegebenen Wasser zu hydrolysierbaren Gruppen A in allen eingesetzten Ausgangsverbindungen 1:1 bis 0,3:1, insbesondere 0,7:1 bis 0,5:1 beträgt.

15. Verwendung der Beschichtungszusammensetzung nach irgendeinen der Ansprüche 1 bis 9 zur Beschichtung von Glas, Keramik, Metall, Kunststoffen und Papier, insbesondere zur Beschichtung von Außen- und Innenspiegeln von Kraftfahrzeugen.

## Claims

1. Coating composition based on polycondensates of one or more hydrolizable compounds of at least one element M of the main groups III to V and the subgroups II to IV of the periodic system of elements, at least a part of said compounds having also non-hydrolizable, carbon-containing groups B in addition to hydrolizable groups A and the total molar ratio of groups A to groups B in the monomeric starting compounds from which they are derived being 10:1 to 1:2, characterized in that 0.1 to 100 mol-% of said groups B are groups B' which on the average contain 5 to 30 fluorine atoms bonded to one or more aliphatic carbon atoms, said carbon atoms being separated from M by at least two atoms.

2. Coating composition according to claim 1, characterized in that the elements M are selected from Si, Al, B, Pb, Sn, Ti, Zr, V and Zn, particularly from Si, Al, Ti and Zr, or mixtures of said elements.

3. Coating composition according to any one of claims 1 and 2, characterized in that the molar ratio of groups A to groups B is from 5:1 to 1:1, and particularly from 4:1 to 2:1.

4. Coating composition according to any one of claims 1 to 3, characterized in that 1 to 50, particularly 20 to 30, and particularly preferred 5 to 25 mol-% of the groups B are groups B'.

5. Coating composition according to any one of claims 1 to 4, characterized in that in the groups B', on the average 5 to 25 and particularly 8 to 18 fluorine atoms are bonded to aliphatic carbon atoms, which carbon atoms are separated from M by at least two other atoms, preferably carbon atoms.

6. Coating composition according to any one of claims 1 to 5, characterized in that 1 to 100, particularly 5 to 85, and particularly preferred 20 to 70 mol-% of the groups B (including the groups B') have at least one carbon-to-carbon double or triple bond and are preferably selected from acryloxyalkyl and methacryloxyalkyl groups.

7. Coating composition according to any one of claims 1 to 6, characterized in that particularly in the presence of hydrolizable compounds of Al, Ti and/or Zr a part of the groups B forms a complex with the corresponding M, the complex forming groups being preferably selected from optionally fluorinated and/or optionally unsaturated aliphatic carboxylic acids, β-diketones and esters of β-carbonylcarboxylic acids.

8. Coating composition according to any one of claims 6 and 7, characterized in that it also contains a photo-initiator.

9. Coating composition according to any one of claims 6 to 8, characterized in that it further contains one or more radically polymerizable carbon compounds, preferably selected from styrene, acrylic acid, methacrylic acid and derivatives thereof.

10. Process for the preparation of a coating composition according to claim 1, characterized in that first all or a part of the starting compounds without groups B' are hydrolized and precondensed by the addition of water, then the starting compounds having groups B' are added and after the reaction thereof with the precondensates already present, the hydrolysis and condensation of the species present is continued by adding further water and optionally the remaining starting compounds without groups B' until a system capable of being coated is obtained, the addition of the starting compounds having groups B' being effected only after the water content of the system is not more than 5% by wt., based on the total weight of the system without optionally employed solvent, and not more than 50% of the theoretically possible M-OH groups are present in the system.

11. Process according to claim 10, characterized in that at least 90 and preferably at least 95 mol-% of the hydrolizable groups A in the starting compounds are alkoxy groups, particularly C₁₋₄ alkoxy groups and particularly preferred methoxy and ethoxy.

12. Process according to any one of claims 10 and 11, characterized in that the starting compounds are compounds of Si, optionally in combination with compounds of Al and/or Zr and/or Ti.

13. Process according to any one of claims 10 to 12, characterized in that the water content of the system prior to the addition of the starting compounds having groups B' is not higher than 3.5, and particularly not higher than 2 % by wt.

14. Process according to any one of claims 10 to 13, characterized in that the molar ratio of total water added to hydrolizable groups A in all of the starting compounds employed ranges from 1:1 to 0.3:1, particularly from 0.7:1 to 0.5:1.

15. Use of the coating composition according to any one of claims 1 to 9 for coating glass, ceramics, metal, plastics and paper, particularly for coating the exterior and interior mirrors of motor vehicles.

## Revendications

1. Composition de revêtement à base de polycondensats d'un ou plusieurs composés hydrolysables d'au moins un élément M provenant des groupes principaux III à V et des groupes secondaires II à IV du système périodique de classification des éléments, au moins une partie de ces composes comprenant, en plus des groupes A hydrolysables, aussi des groupes B carbones non hydrolysables, et le rapport molaire total des groupes A aux groupes B dans les composés monomères de départ étant compris entre 10:1 et 1:2, caractérisée en ce que 0,1 à 100 % en moles des groupes a sont des groupes B' qui contiennent en moyenne de 5 à 30 atomes de fluor qui sont liés a un ou plusieurs atomes de carbone aliphatique qui sont séparés de M par au moins deux atomes.

2. Composition de revêtement selon la revendication 1, caractérisée en ce que les éléments M soit choisis parmi Si, Al, a, Pb, Sn, Ti, Zr, V et Zn, en particulier parmi Si, Al, Ti et Zr, ou des mélanges de ces éléments.

3. Composition de revêtement selon l'une quelconque des revendications 1 et 2, caractérisée en ce que le rapport molaire des groupes A aux groupes B vaut entre 5:1 et 1:1, et en particulier entre 4:1 et 2:1

4. Composition de revêtement selon l'une quelconque des revendications 1 à 3, caractérisée en ce que 1 à 50, en particulier 2 à 30, et d'une manière particulièrement préférée 5 à 25 % en moles des groupes B sont des groupes B'.

5. Composition de revêtement selon l'une quelconque des revendications 1 à 4, caractérisée en ce que, dans les groupes B', en moyenne 5 à 25, et en particulier 8 à 18 atomes de fluor sont liés à des atomes de carbone aliphatique qui sont séparés de M par au moins deux autres atomes, de préférence des atomes de carbone.

6. Composition de revêtement selon l'une quelconque des revendications 1 à 5, caractérisée en ce que 1 à 100, en particulier 5 à 85, et d'une manière particulièrement préférée 20 à 70 % en moles des groupes a (y compris les groupes B') comportent au moins une liaison carbone-carbone double ou triple et sont choisis, de préférence, parmi les groupes acryloxyalkyles et méthacryloxyalkyles.

7. Composition de revêtement selon l'une quelconque des revendications 1 à 6, caractérisée en ce que, en particulier en présence de composés hydrolysables de Al, Ti et/ou Zr, une partie des groupes a forme un complexe avec le M correspondant, les groupes complexants étant choisis, de préférence, parmi les acides carboxyliques aliphatiques éventuellement fluorés et/ou éventuellement insaturés, les β-dicétones et les esters des acides β-carbonylcarboxyliques.

8. Composition de revêtement selon l'une quelconque des revendications 6 et 7, caractérisée en ce qu'elle contient, en outre, un photo-initiateur.

9. Composition de revêtement selon l'une quelconque des revendications 6 à 8, caractérisée en ce qu'elle contient, en outre, un ou plusieurs composés carbonés à polymérisation radicalaire, de préférence choisis parmi le styrène, l'acide acrylique, l'acide méthacrylique et leurs dérivés.

10. Procédé de préparation d'une composition de revêtement selon la revendication 1, caractérise en ce que, d'abord, on hydrolyse l'ensemble ou une partie des composés de départ sans groupes B', grâce à l'addition d'eau, et on les précondense, ensuite, on mélange les composés de départ avec les groupes B' et, après la réaction de ceux-ci avec les précondensats déjà présents, on continue l'hydrolyse et la condensation des espèces présentes, grâce à l'addition d'une quantité supplémentaire d'eau et éventuellement des composés de départs restants sans groupes B', jusqu'à l'obtention d'un système apte à l'enduction, l'addition des composés de départ sans groupes B' n'ayant lieu que lorsque la teneur en eau du système devient inférieure à 5 % en poids, par rapport au poids total du système sans le solvant eventuellement utilisé, et seulement quand la quantité théoriquement possible de groupes M-OH dans le système devient inférieure à 50 %.

11. Procédé selon la revendication 10, caractérisé en ce qu'au moins 90 %, et de préférence au moins 95 % en moles des groupes A hydrolysables dans les composés de départ sont des groupes alcoxy, en particulier des groupes alcoxy en C₁₋₄, et d'une manière particulièrement préférée, des groupes méthoxy et éthoxy.

12. Procédé selon l'une quelconque des revendications 10 et 11, caractérise en ce que les composés de départ sont des composés de Si, éventuellement combinés avec des composés de Al et/ou Zr et/ou Ti.

13. Procédé selon l'une quelconque des revendications 10 et 12, caractérisé en ce que la teneur en eau du système avant l'addition des composés de départ avec des groupes B' ne dépasse pas 3,5 et en particulier 2 % en poids.

14. Procédé selon l'une quelconque des revendications 10 à 13, caractérisé en ce que le rapport molaire de la quantité totale d'eau ajoutée aux groupes A hydrolysables dans tous les composés de départ utilisés est comprise entre 1:1 et 0,3:1, en particulier entre 0,7:1 et 0,5:1.

15. Utilisation de la composition de revêtement selon l'une quelconque des revendications 1 à 9 pour une enduction sur du verre, une céramique, un métal, des matières plastiques et du papier, en particulier pour une enduction sur des rétroviseurs extérieurs et intérieurs d'automobiles.
